# EUROPEAN PATENT APPLICATION

(11) **EP 0 725 286 A1**
(43) Date of publication of application: **07.08.1996**
(21) Application number: 95308096.7
(22) Date of filing: 13.11.1995
(51) Int. Cl.: G02B 5/28, G02B 5/08, B60R 1/08

(54) **Optical filter with neutral reflectance for visual signalling mirror**

(30) Priority: 14.11.1994 US 338378
(71) Applicant: OPTICAL COATING LABORATORY, INC., Santa Rosa, California 95407-7397 (US)
(72) Inventor: Lefebvre, Paul M., Santa Rosa, CA 95403 (US); Rowlands, Scott F., Santa Rosa, CA 95405 (US); Fritschen, John R., Windsor, CA 95492 (US); Hall, John J., Santa Rosa, CA 95405 (US)
(74) Representative: Bayliss, Geoffrey Cyril

(57) **Abstract**

The disclosure relates to a signaling mirror comprising a housing (12) having an opening; mirror means (14) enclosing the housing and having at least a region (18) thereof adapted for transmitting radiation of wavelength within a selected region of the visible spectrum; and illumination means (20-30) within the housing for selectively shining radiation of the selected wavelength on the mirror means. The mirror means comprises a transparent substrate having a thin film coating interference stack (16) forming; (a) a long wave pass thin film filter having a response region for transmitting radiation of wavelength within said selected region of the visible spectrum; and (b) selective absorbing means dispersed throughout the filter for decreasing reflectance and transmittance on the short wavelength side of the spectral response region. Thus the mirror means has visual and ultraviolet opacity, with high transmittance of red radiation, and has neutral reflectance substantially independent of viewing angle.

Iron oxide and silicon are the preferred materials for the high index layers.

## Description

The present invention relates to visual signaling apparatus for vehicles, to mirrors including rear-view mirrors used in visual signaling apparatus, and to optical filters for such mirrors.

Of primary interest here are terms relating to optical filter technology, and to long wavelength pass (LWP) filters for the visible portion of the electromagnetic spectrum.

As used in optical filter terminology, the word "dielectric" implies that a filter comprises thin film materials that are substantially free of absorption throughout the spectral region of interest, i. e., the visible spectrum between about 380 and 780 nanometers (nm). The reflectance and transmittance of all-dielectric LWP filters are complementary, in that the sum of the reflectance and transmittance at each wavelength is equal to 100%. Thus, for the all-dielectric LWP wavelength region of high transmittance, e.g., 600-700 nanometers, the reflectance is low. For shorter wavelengths the reflectance of all-dielectric LWPs may be high, in which case transmittance is complementarily low.

### 1. Prior Signaling Apparatus

Available rear-view mirror-based signaling apparatus comprises a housing, a mirror mounted in an opening in the housing, and one or more sources of interior illumination, such as lamps. According to U.S. Patent 5,014,167 to Roberts, the mirror is a semi-transparent dichroic, all-dielectric LWP interference filter that provides high transmission for red light of wavelength between approximately 600 and 700 nanometers and high reflection for the remaining portion of the visible spectrum, i.e., approximately 400-600 nanometers. For signaling operation, red light from the interior lamp(s) is directed through the semi-transparent dichroic mirror toward the rear of the vehicle, thereby providing a red signal light to following vehicles, cyclists, etc. By using an appropriately shaped array of lamps or a shaped red-transmitting region (e.g., an arrow), the device may signal a turn, a message such as "STOP," etc. In addition to acting as a high transmittance medium for the red light, the mirror simultaneously acts as a reflective rear-view mirror for the driver of the vehicle. In short, for automobiles or trucks or other vehicles, the device supplements the usual function of the rear view mirrors to provide rearward directed brake light, turn signal light or other message signals.

The '167 patent does not disclose the following desirable or beneficial technical features of a signaling mirror: first, photopic reflectance of the mirror (filter) of about 55%; second, neutral color photopic reflectance for a wide range of viewing conditions; and, third, visual opacity of the mirror. In addition, design or manufacturing modifications that lower the product costs and/or improve product uniformity would be beneficial.

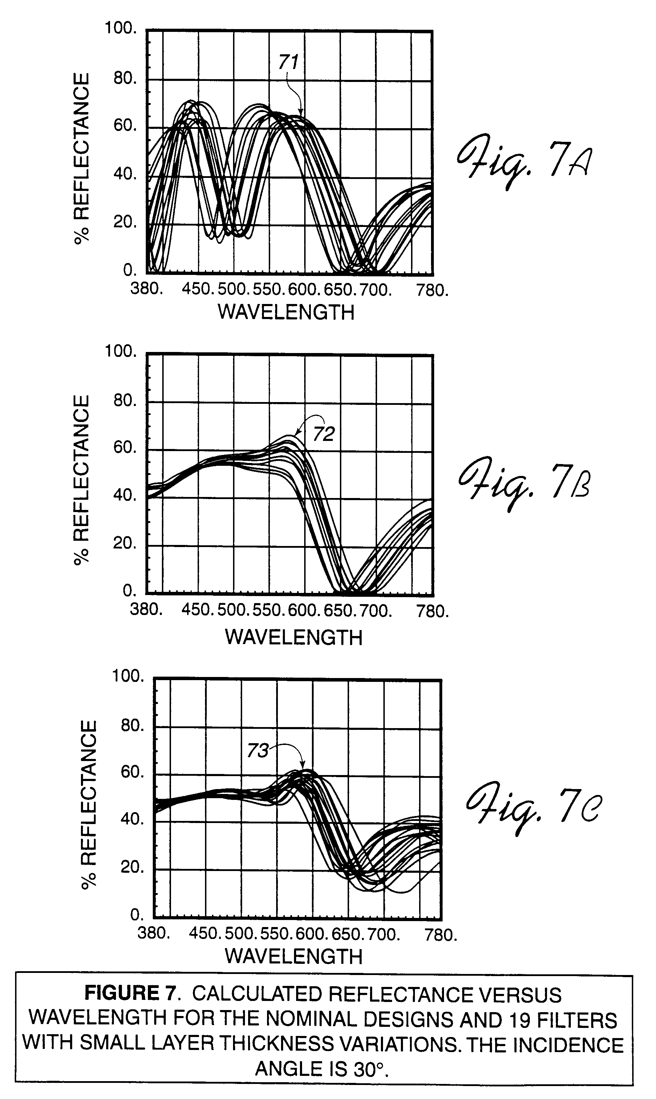

Regarding reflectance, Figure 7 in the '167 patent shows the complementary reflectance and transmittance of the all-dielectric LWP or dichroic filter. Although the reflection/transmittance characteristics are functional, they exhibit several deficiencies. As a mirror, the reflected light from the filter is higher than customarily used for vehicle mirrors. Typically, vehicle mirrors comprise an opaque thin film of chromium on a glass substrate and have a reflectance of about 55% for visible wavelengths. More sophisticated vehicular mirrors composed of multilayer coatings are designed to reflect comparably. Higher reflectance, such as that shown in Figure 7 of the '167 patent, may cause excessive intensity to be reflected to the vehicle operator particularly at night when the reflected image is dominated by headlights of following vehicles.

### 2. Characteristics of LWP Interference Filters

### a. Angle Shift

A filter with neutral reflectance, i.e., with equal reflectance for all wavelengths between 380 and 780 nanometers, would be represented by the same color as the source. However, the transmission and the reflection characteristics of interference filters (including all-dielectric LWP interference filters such as the filter used in the signaling apparatus of the '167 patent) depend on the direction of the incident light. This "angle shift" phenomenon causes the color of an object viewed in the mirror by the driver to vary as the object moves in the viewer's field. To a person viewing the vehicle in normal daylight, the mirror(s) on the vehicle will appear slightly colored rather than neutral or silver. Furthermore, the slight color of the mirrors will vary with the observer's position with respect to the vehicle.

The degree of angle shift of an all-dielectric interference filter is a function of the refractive indices of the layers. high index layers shift less than low index layers; multilayers with higher proportions of high index layers shift less than those with lower proportions; multilayers with higher thickness-averaged index shift less than with lower thickness-averaged index; etc. Normally, high index materials like titanium oxide and niobium oxide are combined with the lowest available index material, such as silicon oxide, in order to provide the greatest interference effects.

### b. Color Sensitivity to Layer Thickness Variations

Interference filters exhibit a color variance for otherwise identical mirrors due to small differences in the thickness of various layers within the filters. In practice, such small variations in layer thicknesses are of two general types: systematic and random. Both systematic and random layer thickness variations occur in conventional thin film coating processes and, although they may be minimized at the expense of process economics or product cost, designs with low sensitivity to layer thickness variations are preferred. Examples of systematic layer thickness variations would be for all layers of one material to be equally different from the nominal or design thickness, e.g., 2% thicker or 3.5% thinner, etc. Random layer thickness variations, as the term implies, are independent or unequal.

### 3. Niobium Oxide/Aluminum Oxide Dielectric Filter

TABLE 1 depicts what is believed to be a prior art filter, designated "filter 1", developed by assignee, which is a 5-layer niobium oxide and aluminum oxide multilayer. The refractive indices for coatings manufactured by the assignee using the materials in filter 1 are provided in TABLE 4. Filter 1 reflects nearly neutral color at low incident angles, but progresses to slightly blue or blue-green color at high angles. Filter 1 provides improved performance for the signaling device compared to the filter described by Figure 7 of the '167 patent and is thought to represent the best solution prior to the present invention.

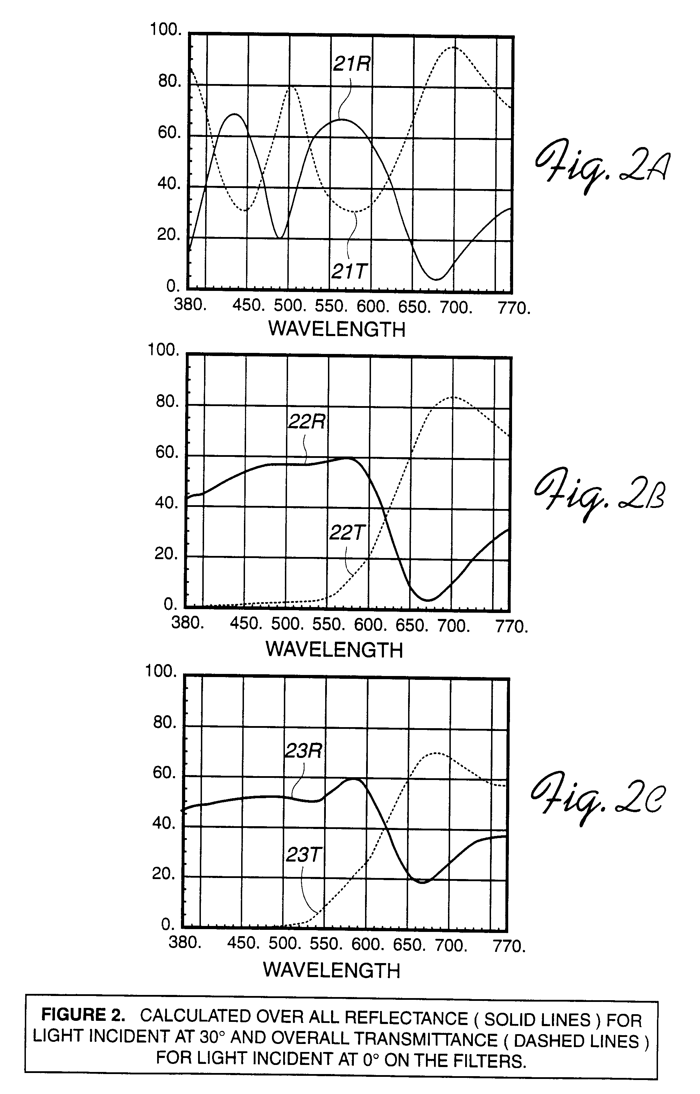

Figure 2A shows the calculated reflectance and transmittance for filter 1. The solid-line curve 21R in Figure 2A is the overall reflectance for light incident at 30° and the dashed-line curve 21T is the overall transmittance for normally incident light, i.e., 0°. The term "overall" means that the calculation takes account of the second or uncoated surface of the coated window. The 30° incidence is near the lowest incidence angle for reflected images in a typical rear view mirror configuration. The photopic reflectance of filter 1 is 55% which is satisfactory for the rear view mirror application. The transmittance is provided for 0° incidence as a matter of standard practice (even though the red lights within the signaling apparatus pass through the dichroic mirror at more nearly 30°).

In the short wavelength region, i.e, wavelengths shorter than about 600 nanometers, the transmittance of filter 1 evidenced by curve 21T is relatively high. Thus, a casual observer of the signaling apparatus would be able to see through the mirror and view the inner workings of the apparatus. In addition to visible light, filter 1 transmits ultraviolet light having wavelengths shorter than about 400 nanometers. In normal use, the ultraviolet portion of sunlight would pass through the mirror and, potentially, degrade sensitive optical and electronic components, for example, those within the visual signal apparatus. To reduce visual and ultraviolet transmission, the substrate for the mirror may be a red-transmitting colored glass or a red-transmitting plastic or glass filter may be placed immediately behind the mirror. In either case, the cost of apparatus is increased.

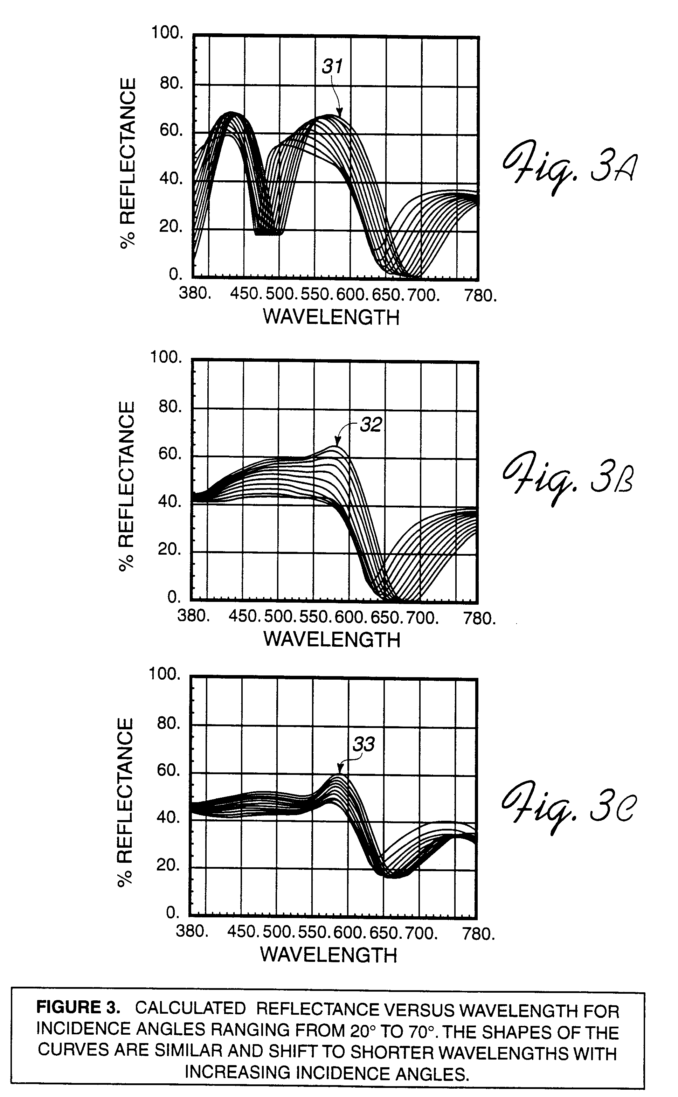

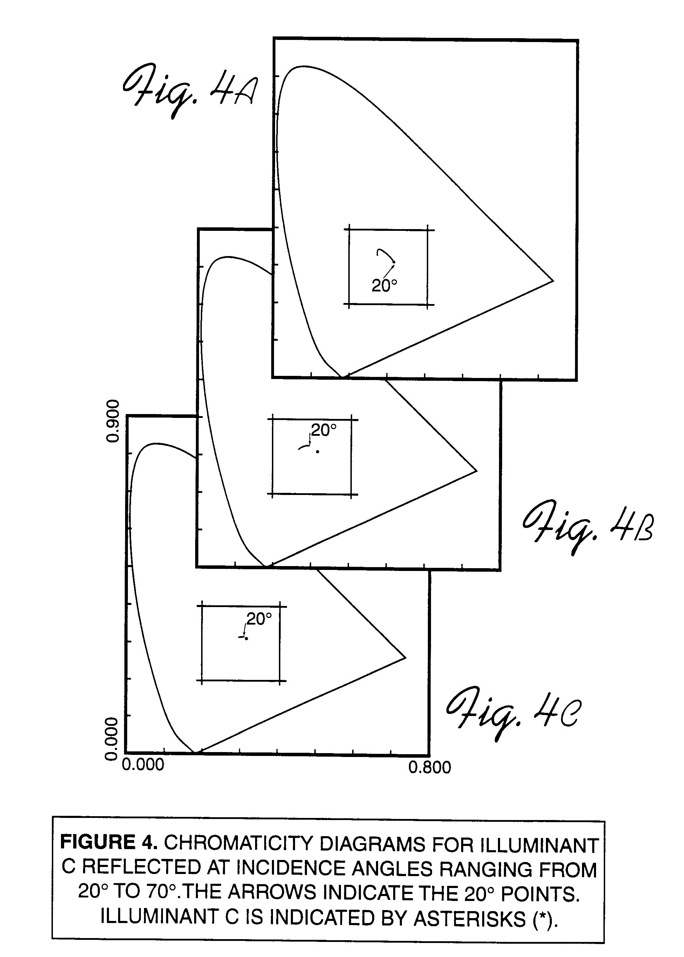

Figures 3A and 4A demonstrate the angle shift effect for filter 1. The family of curves 31 of Figure 3A shows the spectral reflectance for light incident at angles ranging from 20° to 70°. The color of Illuminant C is indicated by the asterisk (*) near the center of the graph. The angle shift of the color of reflected light by filter 1 (blue or blue-green tinting at high angles) is as low as one could expect for an all-dielectric filter. Probably, it could not be improved with changes in the thicknesses or the order of the layers. However, an ideal filter would have much lower angle shift than the all-dielectric filters.

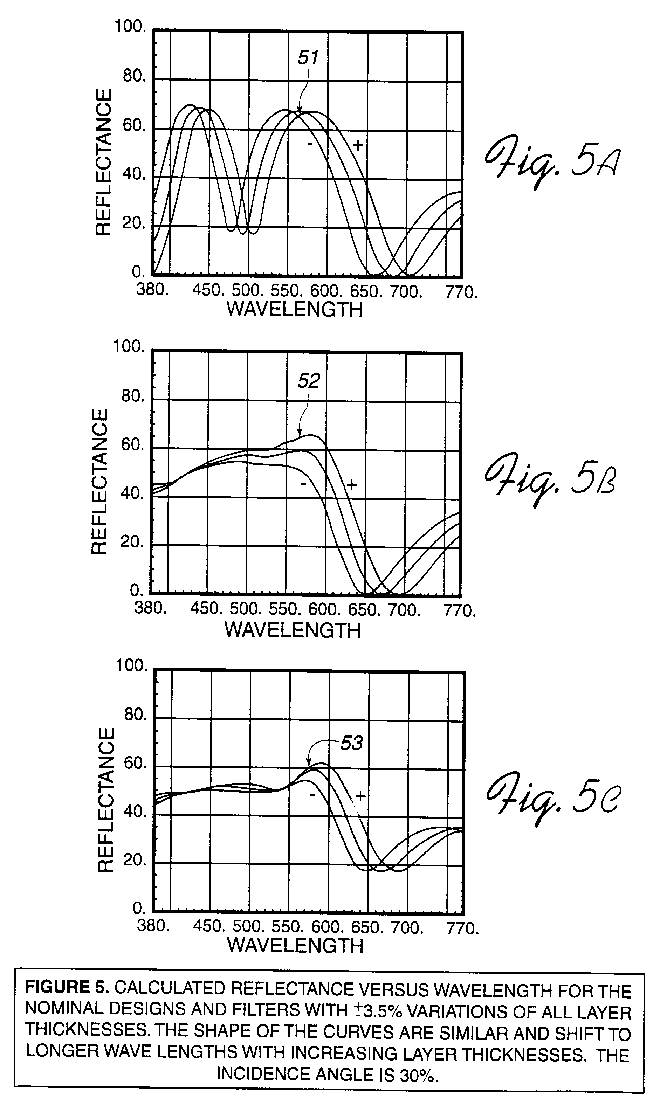

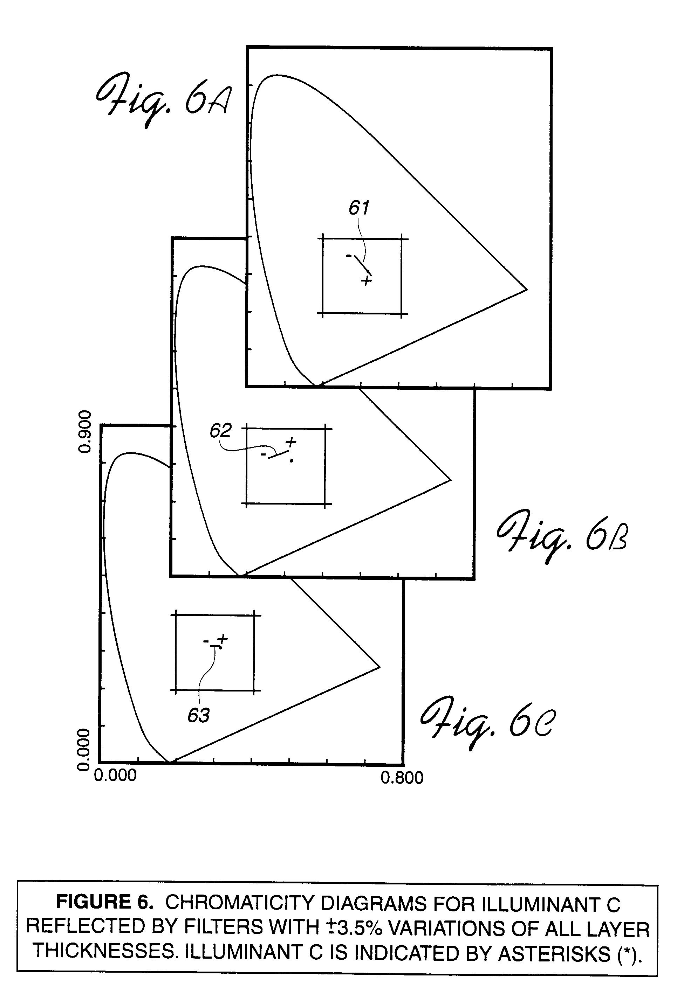

The family of curves 51 of Figure 5A shows the spectral reflectance for light incident at 30° onto three filters in which the thicknesses are systematically varied from the nominal design of filter 1. The thicknesses of all layers in the second and third filters are 3.5% greater and 3.5% lesser than the true design of the first filter. The shapes of the reflectance curves 51 are similar and wavelength-shifted in proportion to the layer thicknesses. The chromaticity diagram of Figure 6A illustrates the reflected color for the three filters with ±% layer thickness variations. The curve 61 in the figure connects the x, y color coordinates for the three filters of -3.5%, 0%, and +3.5% thickness variations. These data are most useful for the comparison of different designs as discussed below.

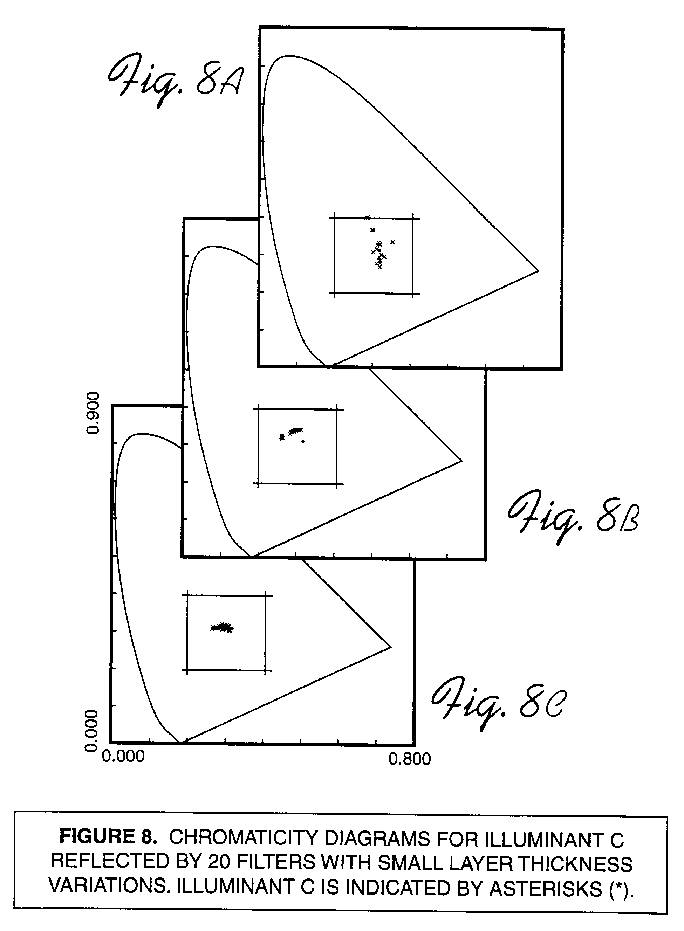

Figure 7A depicts the family 72 of spectral reflectance curves for light incident at 30° onto 20 filters having the nominal design of filter 1. The thicknesses of the layers in 19 of the filters are varied slightly from the nominal values according to the factors shown in TABLE 5. The factors in TABLE 5, excepting the top row for which the factors are all unity, are randomly scattered within a normal distribution about unity with a 5% standard deviation. The impact of the random layer thickness variations of the 20 filters on reflected color for 30° incidence is shown in the chromaticity scatter gram of Figure 8A. Each cross (+) represents the reflected color of one of the 20 design variations, including the nominal design. The range of color variations is large. In fact, color variations of this magnitude between products would be unacceptable. To control these variations, filters with this design (filter 1) must be manufactured with very precise thickness controls.

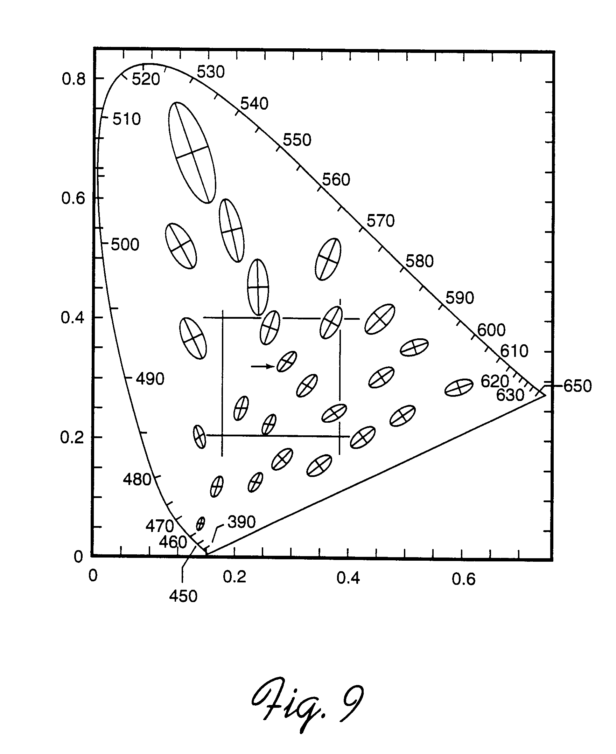

Figure 9A depicts so-called MacAdam color difference sensitivity ellipses for filter 1. The MacAdam ellipses facilitate assessing the differences in colors represented by x, y locations on the chromaticity diagram. The ellipses indicate magnitudes and directions of color difference sensitivities. The long axes of the ellipses indicate the directions of least sensitivity, i.e., the directions in which the largest changes of x, y positions are required to reach the levels of perceived color differences. The tolerance for color differences between product samples due to random layer thickness variations is greatest in the directions of the long ellipse axes and least in the orthogonal directions of the short ellipse axes. The MacAdam ellipse nearest to the location of Illuminant C is indicated by an arrow in Figure 9A. Comparing the color variations of Figure 8A with Figure 9A, indicates the trend of variations undesirably is nearly aligned with the direction of maximum sensitivity.

In one aspect, the present invention is embodied in a thin film visual filter composite, comprising: a transparent substrate; a long wave pass thin film interference filter having a selected response region in the visible spectrum; and selective absorbing means throughout the filter for providing low transmittance in the short wavelength portion of the spectral response region and visual and ultraviolet opacity, and neutral reflectance.

The present invention is also embodied in a signaling mirror of the type comprising a housing having an opening; mirror means enclosing the housing and having at least a region thereof adapted for transmitting radiation of wavelength within a selected region of the visible spectrum; and illumination means within the housing for selectively shining radiation of the selected wavelength on the mirror means, the improvement wherein the mirror means comprises: a transparent substrate; a thin film coating interference stack forming (a) a long wave pass thin film filter having a response region for transmitting radiation of wavelength within said selected region of the visible spectrum; and (b) selective absorbing means dispersed throughout the filter, for decreasing reflectance and transmittance on the short wavelength side of the spectral response region; whereby the mirror means has visual and ultraviolet opacity, with high transmittance of red radiation, and has neutral reflectance substantially independent of viewing angle.

In yet another aspect, tlie present invention is embodied in a thin film optical filter providing high transmittance of red light, absorption of wavelengths shorter than about 600 nm, and stable neutral reflection, and comprising a thin film long wave pass interference stack of n alternating layers of high index of refraction material (H) and low index of refraction material (L), said stack providing high transmittance of wavelengths within the red portion of the visible spectrum, and wherein the H material absorbs radiation of wavelength shorter than about 600 nanometers, independent of reflectance.

In one preferred embodiment, the outer layer of the thin film filter is iron oxide, providing abrasion and scratch resistance, and the thin film filter and the selective absorbing means comprise layers in the sequence iron oxide, silicon oxide, iron oxide, silicon oxide and iron oxide.

In a presently preferred embodiment, the outer layer of the thin film filter is iron oxide, providing abrasion and scratch resistance and the thin film filter and the selective absorbing means comprise layers in the sequence iron oxide, silicon oxide and iron oxide.

Other useful, high index materials with selective absorption include silicon; the sulfides, selenides and tellurides of cadmium and zinc; the nitrides of titanium, hafnium and zirconium; and mixtures or combinations thereof. Other useful low index materials include oxides of aluminum, niobium, tantalum, zirconium, scandium, hafnium, zinc, tin, indium and titanium; fluorides of magnesium, aluminum and cerium; silicon nitride; and combinations or mixtures thereof.

The following is a description of some specific embodiments of the present invention which will be described in conjunction with the accompanying drawings, in which:

Figure 1B depicts the measured reflectance and transmittance for light incident at 0° on a five-layer filter which embodies the present invention.

Figure 1C depicts the measured reflectance and transmittance for light incident at 0° on a three-layer filter which embodies the present invention.

Figures 2A, 2B and 2c depict the overall reflectance for light incidence at 30° and overall transmittance for light incident at 0° on, respectively, the prior OCLI filter, the five-layer filter, and the three-layer filter (hereafter, "the three filters").

Figures 3A, 3B and 3c depict the calculated reflectance versus wavelength for incidence angles ranging from 20° to 70° for the three filters.

Figures 4A, 4B and 4C are chromaticity diagrams for illuminant C reflected at incidence angles ranging from 20° to 70° for the three filters.

Figures 5A, 5B and 5C depict the calculated reflectance versus wavelength for the nominal designs and filters with ±3.5% variations of all layer thickness, for the three different filters.

Figures 6A, 6B and 6C are chromaticity diagrams for illuminant C reflected by filters with ±3.5% variations of all layer thicknesses, for the three filters.

Figures 7A, 7B and 7C depict the calculated reflectance versus wavelength for nominal designs of the three different filters and for 19 additional filters for each which have small layer thickness variations relative to the nominal design.

Figures 8A, 8B and 8C depict chromaticity diagrams for illuminant C reflected by 20 filters with small layer thickness variations, respectively, for the three filters.

Figure 9A depicts the statistical variation of chromaticity matches in different parts of the CIE 1931 chromaticity diagram, for the prior OCLI filter.

Figure 10 depicts an improved signaling mirror incorporating the present invention.

### A. Filter Design

### 1. Overall Design

TABLES 2 and 3 depict embodiments of the present invention, in the form of a long wavelength pass filter which is suitable for use in the mirror of a signaling mirror device of the type described for example in the above-discussed US patent 5,014,167. The illustrated filter comprises a thin film interference stack of n alternating layers of high index of refraction material (H) and low index of refraction material (L), where n ≥ 3 and preferably n = 3 or 5. That is, preferably, n ≤ 5. The H material is selectively absorbing. As a result, the selectively absorbing material is an integral component of the L and H stack and is distributed throughout the stack. The resulting filter is characterized by the required high transmittance for relatively longer wavelengths (λ ≥ ^{~}600 nm); moderate photopic reflectance of about 55%; neutral color photopic reflectance for a wide range of viewing angles; low transmittance independent of reflectance for shorter wavelengths, typically ≤ ^{~}600 nm, and visual and ultraviolet opacity; and relative color insensitivity to small variations in layer thicknesses.

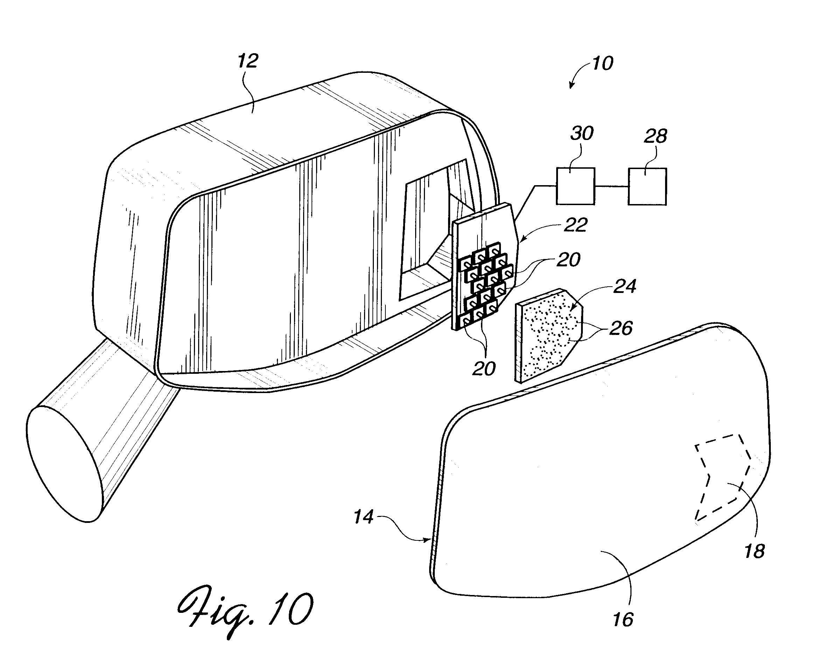

Figure 10 depicts a representative signaling mirror assembly 10 which incorporates the present invention. The mirror comprises a housing 12 and mirror 14 having a long wavelength pass filter coating 16 formed on the front or outside surface thereof in accordance with the present invention. Typically, an opaque coating is formed on the opposite, interior side of the mirror. A transparent aperture or coating-free area 18 in the opaque coating defines the shape of the mirror region through which red light is transmitted for signaling a turn, or braking, or signaling other information. In the illustrated assembly 10, the aperture 18 is arrow-shaped, for indicating a right turn. Alternatively, of course, a non-directional aperture or group of apertures, for example, in the shape of a horizontal bar, could be used to indicate application of the vehicle brakes, the aperture(s) could be symbols or words such as "STOP," etc. An array of red lights 20-20 is mounted on a circuit board 22 which in turn is mounted within the housing. A mating lens reflector array 24 comprises reflectors 26-26 for each of the red light bulbs for collimating the light from the bulbs into a directed beam onto the aperture 18. In operation, voltage from a source 28 such as the vehicle's battery is applied to the light bulbs 20-20 via control means 30 such as a turn signal switch or brake light switch to turn on the light bulbs and cause the red light to be transmitted through the aperture 18 and the associated region of the long wavelength pass filter coating 16. At other times, when the red lights are not turned on, the mirror coating 16 effects a mirror surface which has the above-described characteristics and is of uniform appearance, including in the region over the aperture.

TABLE 2 depicts a presently preferred embodiment of a five layer filter, designated "filter 2", which comprises in order in the direction from the first or viewer side of the filter to the supporting substrate (not own), iron oxide, silicon oxide, iron oxide, silicon oxide and iron oxide. Typically the substrate is a sheet of optically transparent material such as plastic or glass. TABLE 3 depicts a presently preferred embodiment of a three layer filter, designated "filter 3," which comprises in order, again in the direction of incident light, iron oxide, silicon oxide and iron oxide.

The mechanical ruggedness of the filter according to the present invention--specifically the scratch and abrasion resistance (see the discussion below)--is enhanced because the very robust iron oxide is used as the outer layer. Iron oxide is the presently preferred H material, not only because of its durability, but also because of its relatively high index of refraction and other optical and physical qualities. The preferred L material is silicon oxide, because of its relatively low index of refraction and other optical and physical qualities. As discussed below, the three layer filter is preferred because of the low layer count, the low total thickness of the multilayer, the high optical performance and the robustness of the coating.

### 2. Absorbing Materials

In addition to iron oxide (Fe₂O₃), several materials or material combinations selectively absorb light at wavelengths shorter than about 600 nanometers. Presumably, any such material could be used in a thin film design with the desired features, as the L material or the H material, assuming a compatible H or L material. Other useful high index materials with selective absorption include silicon; the sulfides, selenides and tellurides of cadmium and zinc; the nitrides of titanium, hafnium and zirconium; and mixtures or combinations thereof.Iron oxide is the most robust of these materials (see the discussion of scratch and abrasion resistance below) and is preferred for the visual signaling apparatus application. Thin films of iroii oxide can be prepared by reactive evaporation, reactive sputtering, ion assisted or ion augmented reactive evaporation, ion assisted or ion augmented reactive sputtering, CVD (chemical vapor deposition) or other physical or chemical vapor deposition methods. Other useful low index materials include oxides of aluminum, niobium, tantalum, zirconium, scandium, hafnium, zinc, tin, indium and titanium; fluorides of magnesium, aluminum and cerium; silicon nitride; and combinations or mixtures thereof.

Commonly assigned US patent 5,200,085 to Meredith and Lefebvre discloses the incorporation of iron oxide films in red, orange, or yellow filters for light bulbs. These LWP filters comprise 5 or 7 layers of iron oxide and another, typically lower refractive index, material. The '085 filters have high reflectance for the short wavelengths and therefore have colored reflectance in contrast to the filter according to the present invention, which has moderate reflectance in the short wavelength region and color neutrality. Also, the '085 patent describes the low angle shift of the color of transmitted light by the LWP which contains selective absorbing material. There is no disclosure in the '085 patent that the angle shift of reflected light may be suppressed by employing a selective light behavior. In addition, although the '085 patent describes the opacity of the filters for shorter wavelengths, it does not disclose insensitivity to layer thickness variations nor neutral reflected color.

### 3. Scratch and Abrasion Resistance

As alluded to above, in addition to the optical properties described above, the design of the present filter provides excellent scratch and abrasion resistance. As is known, scratch and abrasion resistance of multilayer coatings depends on many factors, including adhesion, hardness and friction. These in turn depend on the composition and thickness of the layers and the layer formation process. For oxide layers formed with optimum processes, scratch and abrasion resistance is primarily dependent on the outer layer(s). Here, the use of iron oxide as the outer layer, in both the three layer and the five layer embodiments of the filter, provides excellent scratch and abrasion resistance, especially relative to alternative materials such as aluminum oxide.

### B. Examples

Samples of the three layer and five layer embodiments of the present filter were prepared by deposition on sheets of transparent glass using reactive sputtering and a modification of the MetaMode® apparatus described in commonly assigned U.S. Patent No. 4,851,095 to Scobey et al. The '095 patent is incorporated by reference. As described therein, the reactor system comprises a vertical cylinder chamber with a vertical cylinder rack and vertically oriented rectangular targets. Although the MetaMode® reactor system described in the '095 patent can be used unchanged, in the presently preferred approach, the reactor system described in the '095 patent is modified in that the iron and silicon oxides are deposited by conventional reactive magnetron sputtering in which the metal vapor (silicon or iron) is sputtered from the target and condensed on the substrate in an oxygen-bearing atmosphere. (In the reactor system described in the '095 patent, sputtering is done in an inert atmosphere and tlie reaction occurs in a separate zone.) As with the '095 reactor system, the substrate rotates past the targets, only one of which is operating at a time. The rate of rotation and the dwell time (in front of the target) are not critical in this process; the rotation provides circumferential uniformity to the layer thickness, i.e., the entire circumference of the cylinder-shaped rack is covered with substrates and all are coating simultaneously with one slim target of each material.

Perhaps different from the most common reactive magnetron sputter processes are the targets for iron and silicon. Iron, a magnetic material, requires special treatment for magnetron sputtering. This is compensated by using a thin target material thickness, i.e., the sheet of iron is thinner than for other target materials, and otherwise compensated with high strength magnets in the magnetron target assembly. The silicon sputter target is a dual C-Mag unit (a cylindrical magnetron unit) available from Airco coating Technology, Concord, CA.

The dimensions of tlie relevant components or the present reactor system are:

| | |
|---|---|
| Chamber diameter: | 48" (inches) |
| Rack diameter, useful height: | 44" dia. x 32" high |
| Silicon C-Mag target size: | 3" wide x 44" high |
| Iron planar magnetron target: | 5" wide x 50" high |
| Target-to-substrate spacing: | 2" |
| Rack rotation speed: | 25 rpm. |

To implement deposition/formation of the signaling mirror coatings, the following process steps were used:
- 1.: Load parts
- 2.: Evacuate the chamber to less than 3 x 10⁻⁵ torr
- 3.: Turn on rack rotation
- 4.: Add/adjust argon flow
- 5.: With shutter closed, ignite the iron target plasma
- 6.: Add/adjust oxygen gas flow and open shutter
- 7.: Deposit the first layer
- 8.: Close shutter and shut off target power
- 9.: Repeat steps 4-8 for appropriate target until multilayer coating is complete. (Total coating time is approximately 150 minutes for the 3-layer design.)
- 10.: Shut off the process and open the machine to the atmosphere.

The associated process parameters are:

| Parameters | Iron | silicon |
|---|---|---|
| Target type: | planar magnetron | dual C-magnetron |
| Target power: | 12 kW | 2 x 6 kw = 12 kw |
| Argon flow rate: | 150 sccm | 180 sccm |
| Oxygen flow rate: | 110 sccm | 240 sccm |
| Total pressure: | 5.2 x 10⁻³ torr | 3.0 x 10⁻¹ torr |
| Substrate temperature: | ambient, with process-induced increase from about 23°C to about 45°C. | |

It should be noted that the present, very low layer count filter can be produced faster and with less cost than non-absorbing dichroic filters with the same or a lower level of blocking and optical performance, because such filters typically comprise thirty or more layers.

It should be noted also that the reflectance of interference filters containing absorbing materials is generally not symmetric: the reflectance differs with the side of incidence (transmittance of interference filters is symmetric). Because of the asymmetric reflectance, preferably the LWP filter according to the present invention is formed on the side of the substrate on which the observer's image is incident. This first-surface orientation minimizes the magnitude of the reflected image from the second or uncoated surface of the substrate and is preferred for vehicle external rear view mirrors.

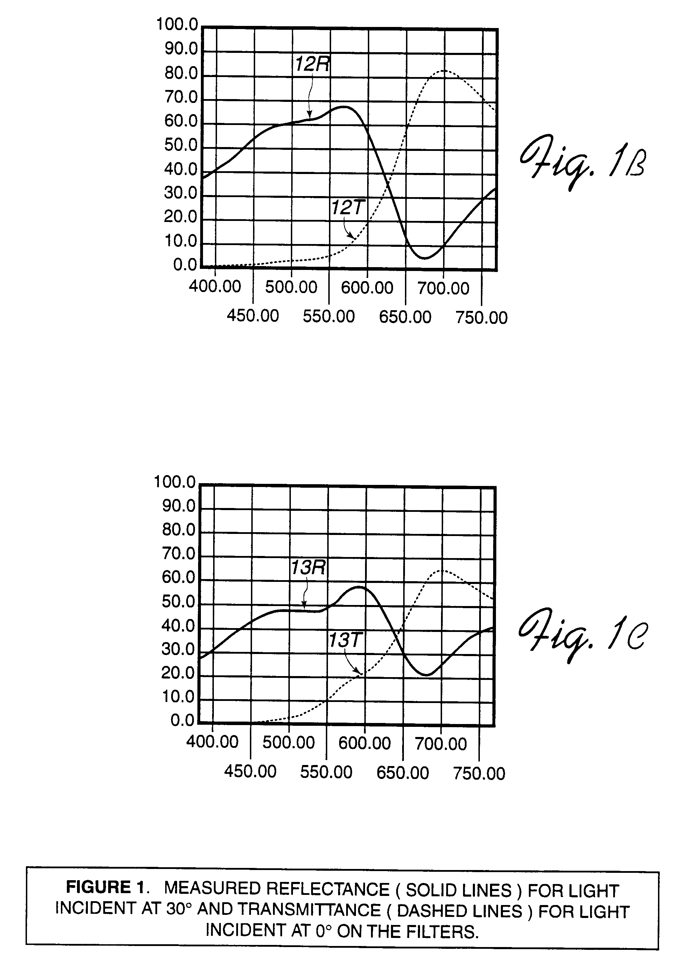

Figures 1B, 1C, 2B and 2C depict the measured and calculated reflectance and transmittance for filters 2 and 3 made using the above process steps and parameters. The solid-line curves (designated "R") are the overall reflectances for light incident at 30° to the filter, whereas the dashed-line curves (designated "T") are the overall transmittances for normally incident light, that is, light incident at 0° to the filter. Curves 12R and 12T, Figure 1B, depict the calculated reflectance and transmittance, respectively, for the five layer filter 2, whereas 22R and 22T, Figure 2B, depict the measured reflectance and transmittance for that filter. Similarly, curves 13R and 13T, Figure 1C, depict the calculated reflectance and transmittance, respectively, for the three layer filter 3, whereas 23R and 23T, Figure 2C, depict the measured reflectance and transmittance for that filter. The reflectance and transmittance curves indicate substantial improvement over the short wavelength reflectance and transmittance characteristics of the all-dielectric filter 1, Figure 2A. Reflectance for filters 2 and 3 is moderate at short wavelengths, specifically for wavelengths shorter than about 600 nm, which is characteristic of neutral color reflectance. The transmittance curves of Figures 1 and 2 demonstrate that filters 2 and 3 have the additional feature of low transmittance for wavelengths shorter than about 600 nanometers. The transmittance to visual and ultraviolet radiation is very low at these short wavelengths and the filters are nearly opaque, despite the decreased reflectance evidenced over the same range of wavelengths (that is, transmittance is substantially independent of reflectance.) The visual and ultraviolet opacity is desirable, both for perceptual reasons and in protecting components such as the electronic components internal to the mirror from ultraviolet exposure and degradation.

The calculated angle shifts for filters 2 and 3 over the incident angle range of 20° to 70° are illustrated, respectively, by the reflectance curve families 32 and 33 in Figures 3B and 3C and by the chromaticity diagrams shown in Figures 4B and 4C. Compared with the all-dielectric dichroic design, filter 1, the angle shift for filter 2 is comparable and the angle shift for filter 3 is significantly less.

The sensitivities of the filter 2 and 3 designs to uniform and random layer thickness variations are shown in Figures 5, 6 and 7, 8, respectively. The reflectance curves 52, Figure 5B, and 53, Figure 5C, depict the calculated reflectances for three sets each of filters 2 and 3 which have ±3.5% variations in layer thicknesses, whereas Figures 6B and 6C are corresponding chromaticity diagrams. Similarly, the reflectance curves 72, Figure 7B, and 73, Figure 7C, depict the calculated reflectances for twenty sets each of filters 2 and 3 which have small, random thickness variations in the corresponding layers thereof (see the description regarding filter 1, Figure 7A). Figures 8B and 8C are the corresponding chromaticity diagrams for these filters. Compared with the all-dielectric dichroic design, filter 1, the color variations of filters 2 and 3 are smaller and the trends are in more favorable directions with respect to color difference detection. Note that filter 3 contains only three layers, and the thickness variation factors in the last two columns in TABLE 5 do not apply.

### C. Summary

The thin film design according to the present invention incorporates a selectively absorbing material and eliminates the undesirable variances in reflected color of the mirror while maintaining sufficient transmittance of the red light. The new filter maintains neutral reflected color for wide ranges of incident and viewing positions and is insensitive to small variations in layer thicknesses. In addition, the new filter is opaque for wavelengths shorter than about 600 nanometers, that is, it has visual and ultraviolet opacity, and eliminates the need for an additional filtering component in the signaling apparatus. The filter also provides excellent scratch and abrasion resistance.

TABLE 6 summarizes the optical characteristics of the filter according to the present invention and a signaling rear view mirror incorporating the filter, relative to the two prior filters discussed above.

**TABLE 6**

| | Prior Filters | | Invention | |
|---|---|---|---|---|
| | Roberts | OCLI | 5-layer | 3-layer |
| High T @ long λ (red) | Yes | Yes | Yes | Yes |
| Selectively absorbing material (SAM) | No | No | Yes | Yes |
| SAM throughout stack | No | No | Yes | Yes |
| Low R @ short λ | No | Yes | Yes | Yes |
| Opaque for short λ | No | No | Yes | Yes |
| " " low T indep of R | No | No | Yes | Yes |
| Neutral color | No | Yes | Yes | Yes |
| Angle sensitive? | Yes | Somewhat | Somewhat | No |
| Thickness sensitive? | Yes | Yes | Decreased | Decreased |
| T = transmittance; R = reflectance; short λ: ≤600 nm; long λ: ≥600 nm; SAM = selectively absorbing material | | | | |

Based upon the above description, those of usual skill in the art will readily derive modifications and extensions of the present filter and the signaling apparatus incorporating the filter which are within the scope of the present invention and the appended claims.

## Claims

1. A thin film optical filter composite, comprising: a transparent substrate; a long wave pass thin film interference filter having a selected response region in the visible spectrum; and selective absorbing means throughout the filter for providing low transmittance in the short wavelength portion of the spectral response region and visual and ultraviolet opacity, and neutral reflectance.

2. A thin film optical filter providing high transmittance of red light, absorption of wavelengths shorter than about 600 nm, and stable neutral reflection, comprising: a thin film long wave pass interference stack of alternating layers of high index of refraction material (H) and low index of refraction material (L), said stack providing high transmittance of wavelengths within the red portion of the visible spectrum; and said H material absorbing radiation of wavelength shorter than about 600 nanometers, independent of reflectance.

3. A signaling mirror of the type comprising a housing having an opening; mirror means enclosing the housing and having at least a region thereof adapted for transmitting radiation of wavelength within a selected region of the visible spectrum; and illumination means within the housing for selectively shining radiation of the selected wavelength on the mirror means, the improvement wherein the mirror means comprises: a transparent substrate; a thin film coating interference stack forming (a) a long wave pass thin film filter having a response region for transmitting radiation of wavelength within said selected region of the visible spectrum; and (b) selective absorbing means dispersed throughout the filter, for decreasing reflectance and transmittance on the short wavelength side of the spectral response region; whereby the mirror means has visual and ultraviolet opacity, with high transmittance of red radiation, and has neutral reflectance substantially independent of viewing angle.

4. The filter or mirror of any of claims 1 - 3, wherein the outer layer of the stack provides scratch and abrasion resistance.

5. The filter or mirror of any of claims 1 - 3, wherein the selectively absorbing H material is selected from iron oxide; silicon; the sulfides, selenides and tellurides of cadmium and zinc; the nitrides of titanium, hafnium and zirconium; and mixtures or combinations thereof.

6. The filter or mirror of any of claims 1 - 3, wherein the L material is selected from oxides of aluminum, niobium, tantalum, zirconium, scandium, hafnium, zinc, tin, indium and titanium; fluorides of magnesium, aluminum and cerium; silicon oxide; silicon nitride; and combinations or mixtures thereof.

7. The filter or mirror of any of claims 1 - 3, wherein the layers are in the sequence iron oxide, silicon oxide and iron oxide, said filter being further characterized by scratch and abrasion resistance, neutral reflectance and suppression of low angle viewing effect.

8. The filter or mirror of any of claims 1 - 3, wherein the layers are in the sequence iron oxide, silicon oxide, iron oxide, silicon oxide and iron oxide, said filter being further characterized by scratch and abrasion resistance, neutral reflectance and suppression of low angle viewing effect.
